(19) Europäisches Patentamt
European Patent Office
Office européen des brevets

(11) **EP 3 416 380 A1**

(12) **EUROPEAN PATENT APPLICATION**

(43) Date of publication:
**19.12.2018 Bulletin 2018/51**

(51) Int Cl.:
*H04N 13/232* (2018.01)        *H04N 7/18* (2006.01)

(21) Application number: **17305710.0**

(22) Date of filing: **12.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **LANGLOIS, Tristan**
**35576 CESSON-SEVIGNE (FR)**
• **KERBIRIOU, Paul**
**35576 CESSON-SEVIGNE (FR)**
• **ALLIE, Valérie**
**35576 CESSON-SEVIGNE (FR)**

(74) Representative: **Huchet, Anne et al**
**InterDigital CE Patent Holdings**
**1-5, Rue Jeanne d'Arc**
**92130 Issy-les-Moulineaux (FR)**

(54) **METHOD AND APPARATUS FOR GENERATING A POSITIONING ZONE TO OBSERVE A MULTI VIEW CONTENT**

(57)     Apparatus for generating a positioning zone to observe, on a display screen (106), a multi view content acquired by an acquisition device (103) and displayed according a user's position,
wherein it comprises a means (104A) for generating the positioning zone (500) based one or more obtained acquisition parameters of the acquisition device (103) and one or more obtained parameters of the display screen (106).

FIG.1A

FIG.1B

**Description**

TECHNICAL FIELD

The present disclosure relates to the rendering of a multi view content. Particularly, but not exclusively, the present disclosure is directed to the rendering of a multi view multimedia content on a display screen depending on user's position.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A multi view content (so called Light Field content), still image or video, can be obtained by Light Field acquisition system, such as a fixed camera array composed of a plurality of distinct cameras or a plenoptic camera formed by an array of micro-lenses placed in front of an image sensor. For each frame of a Light Field video or each Light Field image, the Light Field acquisition system is able to provide a set of multi-views, a set of depth maps and associated system acquisition parameters.

When rendering a Light Field content on a known display screen (e.g. a 2D TV screen), a user can benefit from the parallax capability offered by the Light Field content, providing a parallax rendering effect and a Virtual Reality (VR) experience. The parallax effect gives a sense of depth and makes a user feel the volume of objects or characters of a scene.

Depending on the Light Field acquisition system and user's position (in particular his head or eyes), the scene coverage can have some limitations leading the user to perceive holes or black surfaces on the edges.

The present disclosure has been devised with the foregoing in mind.

SUMMARY

In a general form, the disclosure concerns a method for generating a positioning zone to observe, on a display screen, a multi view content acquired by an acquisition device and displayed according a user's position, wherein the positioning zone is established based one or more obtained acquisition parameters of the acquisition device and one or more obtained parameters of the display screen.

In an embodiment, the positioning zone can have a pyramid shape.

In an embodiment, the pyramid shape of the positioning zone can be defined by an horizontal angle of view of the acquisition device and a vertical angle of view of the acquisition device.

In an embodiment, the pyramid shape can be centered with respect to the display screen.

In an embodiment, the positioning zone can be defined by a minimum distance from the display screen.

In an embodiment, said minimum distance from the display screen can correspond to the maximum distance between:

- an horizontal minimum distance obtained from a width of the display screen and an horizontal angle of view of the acquisition device,
- a vertical minimum distance obtained from a height of the display screen and a vertical angle of view of the acquisition device.

In an embodiment, the horizontal minimum distance can be obtained from the following equation:

$$z_{min} = \frac{w_{screen}}{2\tan^{-1}\left(\frac{\alpha}{2}\right)}$$

with $w_{screen}$ the width of the display screen, and $\alpha$ the horizontal angle of view of the acquisition device.

In an embodiment, the vertical minimum distance can be obtained from the following equation:

$$z_{min} = \frac{h_{screen}}{2\tan^{-1}\left(\frac{\beta}{2}\right)}$$

with $h_{screen}$ the height of the display screen, and $\beta$ the vertical angle of view of the acquisition device.

In an embodiment, the positioning zone can be defined by a maximum distance from the display screen.

In an embodiment, said maximum distance can be obtained from a minimum height and a maximum height between which the user's gaze can be located.

In an embodiment, said maximum distance can be obtained from an intersection of the pyramid shape and an horizontal band defined by said minimum and maximum heights.

The present disclosure also concerns a method for adjusting a multi view content acquired by an acquisition device and displayed on a display screen depending on a user's position to which a current positioning zone has been obtained according to the method as previously described, wherein said adjusting of the multi view content depends on parameters of a new positioning zone obtained from one or more modifications performed on the current positioning zone.

In an embodiment, the one or more modifications can comprise at least one of:

- a translation in depth direction of the current positioning zone with respect to the display screen,
- a uniform scaling in the horizontal and vertical directions of the current positioning zone.

In an embodiment, the uniform scaling can be applied to both the current horizontal and vertical angles of the current positioning zone.

In an embodiment, said one or more modifications of the current positioning zone can be entered by one or more user's operations through a user interface.

In an embodiment, said user interface can comprise a set of dual arrows wherein:

- a first direction manages the translation in depth direction,
- a second direction, orthogonal to the first direction, manages a scaling factor.

The present disclosure also concerns an apparatus for generating a positioning zone to observe, on a display screen, a multi view content acquired by an acquisition device,
wherein it comprises at least one memory and at least one processing circuitry configured to establish the positioning zone based one or more obtained acquisition parameters of the acquisition device and one or more obtained parameters of the display screen.

The present disclosure further concerns an apparatus for generating a positioning zone to observe, on a display screen, a multi view content acquired by an acquisition device and displayed according a user's position, wherein it comprises a means for generating the positioning zone based one or more obtained acquisition parameters of the acquisition device and one or more obtained parameters of the display screen.

In an embodiment, the established positioning zone can be a pyramid shape.

In an embodiment, the pyramid shape of the positioning zone can be defined by an horizontal angle of view of the acquisition device and a vertical angle of view of the acquisition device.

In an embodiment, the positioning zone can be defined by a minimum distance and a maximum distance from the display screen.

The present disclosure also concerns an apparatus for adjusting a multi view content acquired by an acquisition device and displayed on a display screen depending on a user's position to which a current positioning zone has been obtained according to the method as previously described, wherein the apparatus comprises means for adjusting the multi view content depending on parameters of a new positioning zone obtained from one or more modifications performed on the current positioning zone.

In an embodiment, the one or more modifications can comprise at least one of:

- a translation in depth direction of the current positioning zone with respect to the display screen,
- a uniform scaling in the horizontal and vertical directions of the current positioning zone.

Besides, the present disclosure is further directed to a non-transitory program storage device, readable by a computer, tangibly embodying a program of instructions executable by the computer to perform a method for generating a positioning zone to observe, on a display screen, a multi view content acquired by an acquisition device and displayed according a user's position,
wherein the positioning zone is generated based one or more obtained acquisition parameters of the acquisition device and one or more obtained parameters of the display screen.

The present disclosure also concerns a computer program product which is stored on a non-transitory computer readable medium and comprises program code instructions executable by a processor for implementing a method for generating a positioning zone to observe, on a display screen, a multi view content acquired by an acquisition device and displayed according a user's position,
wherein the positioning zone is generated based one or more obtained acquisition parameters of the acquisition device and one or more obtained parameters of the display screen.

The method according to the disclosure may be implemented in software on a programmable apparatus. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method for generating a positioning zone according to the disclosure.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

BRIEF DESCRIPTION OF THE DRAWINGS

The disclosure will be better understood and illustrated by means of the following embodiments and execution examples, in no way limitative, with reference to the appended figures on which:

- Figure 1A is a schematic diagram of an exemplary rendering system used in which one or more embodiments of the disclosure may be implemented;
- Figure 1B shows the coordinates system used for OpenGL representation;
- Figures 2A to 2D show four projections of a multi view content displayed by the rendering system of Figure 1A depending on the user's head position according to some embodiments;
- Figures 3A and 3B show black bands appearing on the display screen of the rendering system when the user has reached the limits of the displayed multi view content;
- Figure 4 is flow chart of an exemplary method used by some embodiments of the disclosure to generate a positioning zone;
- Figures 5 and 6 depicts the positioning zone obtained from the implementation of the method of Figure 4, respectively in an horizontal plane and a vertical plane;
- Figure 7 depicts a flow chart of an exemplary method used by some embodiments of the disclosure to adapt the display of a multi view content by the rendering system of Figure 1A, when a current positioning zone is modified;
- Figures 8A to 8C show some modifications (depth translation and scaling) applied on a current positioning zone according to some embodiments;
- Figure 9 is flow chart of an exemplary method used by some embodiments of the disclosure to encourage a user observing a multi view content displayed by the rendering device of Figure 1 to stay in a positioning zone;
- Figure 10 shows an example of an exemplary triggering area associated with a positioning zone;
- Figure 11 depicts an exemplary curve showing the relationship between the angle of view of the user's head and the darkness of the display screen of the rendering system of Figure 1;
- Figure 12 shows an exemplary curve linking a computation angle with the angle of view associated with the user's head position.

Wherever possible, the same reference numerals will be used throughout the figures to refer to the same or like parts.

## DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

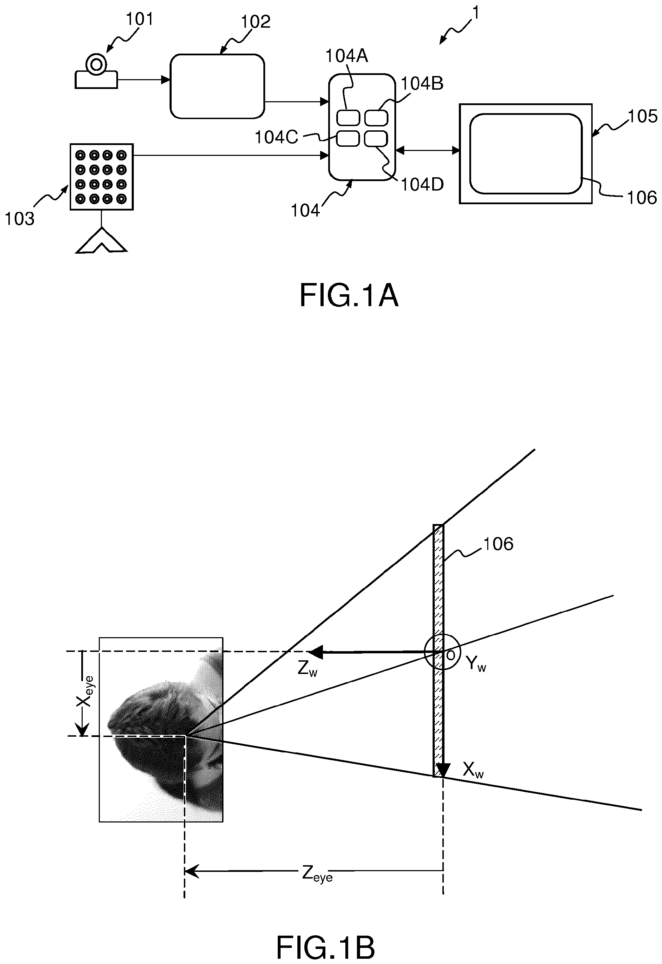

Figure 1A shows a schematic diagram of an exemplary rendering system used in which one or more embodiments of the disclosure may be implemented.

The rendering system 1 comprises a capturing device 101, a processing apparatus 102, an acquisition device 103, an image projection computing apparatus 104 and a display device 105 equipped with a display screen 106.

It should be appreciated that the image projection computing apparatus 104 and the display device 105 can be combined together to form a standalone device, while they have been represented separately in Figure 1A. Similarly, the processing apparatus can be integrated with the image projection computing apparatus.

The capturing device 101 can be formed by a webcam, a video camera, or the like, configured to shoot the face of a user in front of the capturing device 101. The capturing device 101 can be arranged in communication with the processing apparatus 102.

The processing apparatus 102 is configured to receive multimedia content (such as a video) captured by the capturing device 101. From the received content, the processing apparatus 102 can determine the position of the user's head with respect to the display screen 106 and can further track movements of the user's head thanks to known tracking algorithms.

The acquisition device 103 is configured to acquire a multi view content (corresponding to a scene 200), such as a multi view still image or a multi view video. As an illustrative, but non-limitative example, the acquisition device can be formed by a fixed camera array composed of a plurality of distinct cameras regularly arranged or by a plenoptic camera comprising an array of micro-lenses positioned in front of an image sensor.

For each acquired multi view image or each frame of a multi view video, the acquisition device 103 can provide a set of multi-views, a set of depth maps and associated system acquisition parameters.

The image projection computing apparatus 104 can receive both data associated with user's head position and movements from the processing apparatus 102 and the acquired multi view content (image or video) delivered by the acquisition device 103. Based on the received information, the image projection computing apparatus 104 is configured to determine a projection of the multi view content to be displayed on the display device 105 as a function of the position of the user's head.

The projection of the acquired multi view content (set of different images associated with depth maps) on the screen 106 is the result of:

- an un-projection of the original multi view content (so called Multi View data or MVD) to obtain a 3D representation of the scene 200 captured by the acquisition device 103;
- a transformation H for adapting the scene for a proper visualization;
- a re-projection of the 3D data to obtain the image viewed from the user's position on the screen 106.

When the acquisition device 103 is a camera array, the two following matrices are estimated by calibration for each camera:

- a projection matrix $K_c$ (also called intrinsics matrix) defined as:

$$K_c = \begin{bmatrix} f_u & 0 & c_u & 0 \\ 0 & f_v & c_v & 0 \\ 0 & 0 & 0 & 1 \\ 0 & 0 & 1 & 0 \end{bmatrix}$$

wherein:

- $f_u$ and $f_v$ are the focal length of the considered camera of the acquisition device 103 in horizontal direction and vertical direction respectively (units are pixels),
- $c_u$ and $c_v$ are the horizontal and vertical coordinates of the intersection of the optical axis with the sensor of the camera (units are pixels);

- a pose matrix $P_c$ (also called extrinsics matrix) is defined as:

$$P_c = \begin{bmatrix} r_{11} & r_{12} & r_{13} & T_x \\ r_{21} & r_{22} & r_{13} & T_y \\ r_{21} & r_{32} & r_{33} & T_z \\ 0 & 0 & 0 & 1 \end{bmatrix}$$

wherein:

- $r_{11}$ to $r_{33}$ elements form a 3D rotation matrix describing the rotation of the considered camera with respect to the 3D world coordinate system. For convenience reason, the 3D world coordinate system is assumed to be arranged at the center of the acquisition device 103,
- $T_x$, $T_y$ and $T_z$ are components of the translation of the considered camera with respect to the 3D world coordinate system (units are meters).

Considering a pixel (u, v) of the sensor of a camera of the acquisition device 103, its color (referenced RGB) and depth (referenced z(u, v, c)) are available (image and associated depth map). The pixel (u, v) can be un-projected in the 3D world coordinate system by using the following equation:

$$\begin{bmatrix} X \\ Y \\ Z \\ 1 \end{bmatrix} = z_{uv} * P_c * K_c^{-1} * \begin{bmatrix} u \\ v \\ 1/z_{uv} \\ 1 \end{bmatrix} = \begin{bmatrix} T_x + z_{uv}\left(r_{11}\dfrac{u-c_u}{f_u} + r_{12}\dfrac{v-c_v}{f_v} + r_{13}\right) \\ T_y + z_{uv}\left(r_{21}\dfrac{u-c_u}{f_u} + r_{22}\dfrac{v-c_v}{f_v} + r_{23}\right) \\ T_z + z_{uv}\left(r_{31}\dfrac{u-c_u}{f_u} + r_{32}\dfrac{v-c_v}{f_v} + r_{33}\right) \\ 1 \end{bmatrix}$$

wherein $z_{uv}$ is the depth of the pixel at position (u,v) in the image. For natural images, this depth has been estimated with known algorithms.

In the following, the 3D visualization coordinate system (CS) associated with screen 106 is considered as the reference one (identified by $(X_w, Y_w, Z_w)$ in Figure 1 B) arranged at center O of the screen 106 and whose dimensions are normalized with W_screer/2 or H_screer/2 (x and y dimensions are transformed in the range [-1; +1]).

For the re-projection, the following OpenGL matrix of projection $K_{eys}$ can be used:

$$K_{eye} = \begin{bmatrix} \dfrac{Z_{eye}}{W_{screen}/2} & 0 & -\dfrac{X_{eye}}{W_{screen}/2} & 0 \\ 0 & \dfrac{Z_{eye}}{H_{screen}/2} & -\dfrac{Y_{eye}}{H_{screen}/2} & 0 \\ 0 & 0 & -\dfrac{Z_{far}+Z_{near}}{Z_{far}-Z_{near}} & 2\dfrac{Z_{far}Z_{near}}{Z_{far}-Z_{near}} \\ 0 & 0 & -1 & 0 \end{bmatrix}$$

wherein:

- $W_{screen}$ is the screen width and $H_{screen}$ the screen height;
- $(X_{eys}\ Y_{eys}\ Z_{eys})^T$ represents the position of the user in this 3D visualization CS;
- $Z_{near}$ is the distance along the z axis between the eye position and a plane ($z = z_{near}$) below which points in the scene are discarded (not shown in Figure 1B);
- Zf ar is the distance along the z axis between the eye position and a plane ($z = z_{far}$) behind which points in the scene are discarded (not shown in Figure 1B).

Such OpenGL matrix is described for example in the document "OpenGL Programming Guide 9th edition, Appendix E", by Dave Shreiner ,Graham Sellers, John Kessenich - The Khronos OpenGL ARB Working Group - Addison Wesley editor.

A virtual camera (arranged at the user's head position) needs to be placed also in that 3D visualization CS. The following translation matrix $T_{eys}$ (representing the movement of the user's head with respect to the screen 106) is used to compute the image viewed by the user on the screen 106:

$$T_{eye} = \begin{bmatrix} 1 & 0 & 0 & \dfrac{X_{eye}}{W_{screen}/2} \\ 0 & 1 & 0 & \dfrac{Y_{eye}}{H_{screen}/2} \\ 0 & 0 & 0 & -\dfrac{Z_{eye}}{W_{screen}} \\ 0 & 0 & 0 & 0 \end{bmatrix}$$

A 3D point is further transformed thanks to following equation:

$$\begin{bmatrix} u' \\ v' \\ B + A Z_{eye} \\ -Z_{eye} \end{bmatrix} = K_{eye} * T_{eye} * \begin{bmatrix} X \\ Y \\ Z \\ 1 \end{bmatrix}$$

and then projected into the displayed image by making the 4D vector homogeneous:

$$\begin{bmatrix} u \\ v \\ Z' \\ 1 \end{bmatrix}_{eye} = -1/Z_{eye} \begin{bmatrix} u' \\ v' \\ B + AZ_{eye} \\ -Z_{eye} \end{bmatrix} = \begin{bmatrix} -u'/Z_{eye} \\ -v'/Z_{eye} \\ A - B/Z_{eye} \\ 1 \end{bmatrix}$$

wherein $Z_{eys}$ defines the Z of the 3D point viewed in a virtual camera coordinate system (attached to the user's head) while Z' is the depth stored in the Z buffer of the displayed image computation.

It should be noted that the minus sign relies on the fact that, in OpenGL representation, the Z axis is oriented towards the eye so that all 3D points have negative Z value. The $Z_{eys}$ value is consistent with a metric value, while $Z'_{eys}$ = $A - B/Z_{eys}$ is a function of Z with a format convenient for the Z buffer algorithm.

To project a pixel in the MVD format on the screen 106 observed by the user, the following equation is considered:

$$\begin{bmatrix} u \\ v \\ Z' \\ 1 \end{bmatrix}_{eye} = -\frac{1}{Z_{eye}} * K_{eye} * T_{eye} * H * P_c * z_{uv} * K_c^{-1} * \begin{bmatrix} u \\ v \\ 1 \\ Z_{(u,v)} \\ 1 \end{bmatrix}_c$$

Thus, thanks to the rendering system 1, the closer to the screen 106 the user's head is, the more he sees a large portion of the acquired scene 200. The more he moves away from the screen 106, the more he sees a subpart of it.

The display device 105 can be any kind of device equipped with a screen, such as a TV set, a tablet, a smartphone, a laptop, a PDA, a head-mounted device, or the like.

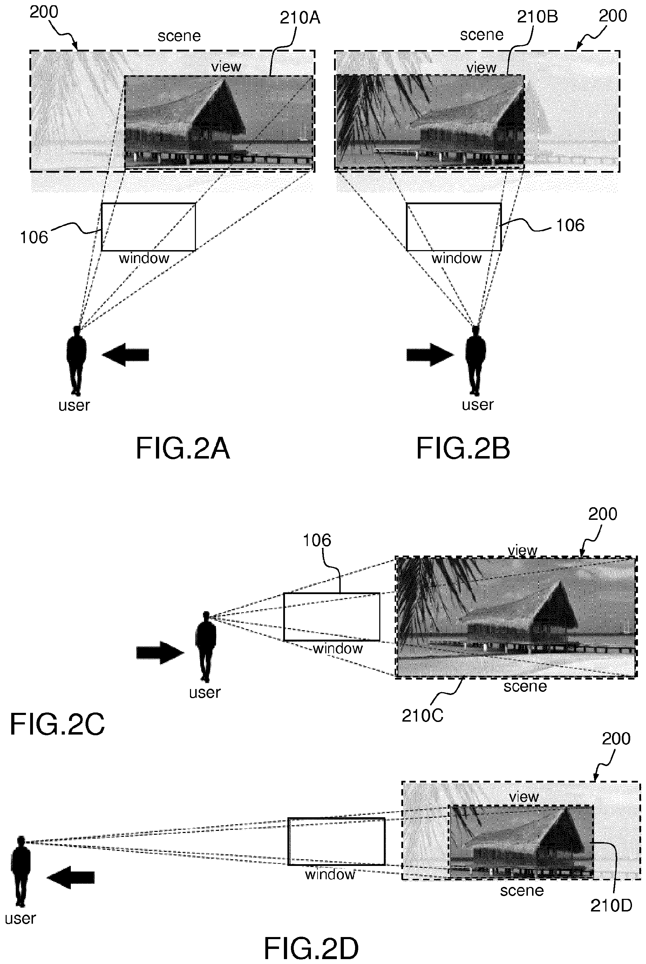

As illustrated in Figures 2A to 2D, the rendering system 1 can display on the screen 106 a projection of the obtained multi view content which depends on the user's head position. The displayed projection depends on the user's head position and the rendering system 1 is adapted to adjust the displayed projection according the user's head movements. Figures 2A to 2D show four examples of projection 210A to 210D of a multi view content of a same acquired scene 200 associated with four different position of the user's head with respect to the display screen 106. The projection displayed on the screen 106 corresponds to the scene 200 observed by the user through a window.

Thus, the rendering system 1 is configured to provide a parallax effect depending on the user's head position in front of the display device 105, when displaying the multi view content on the screen 106. In particular, the parallax effect can be defined by the relative positions of several objects (elements) of the scene 200, these positions being observed by the user. The more the difference of depth between objects is, the more the observed relative position will be modified.

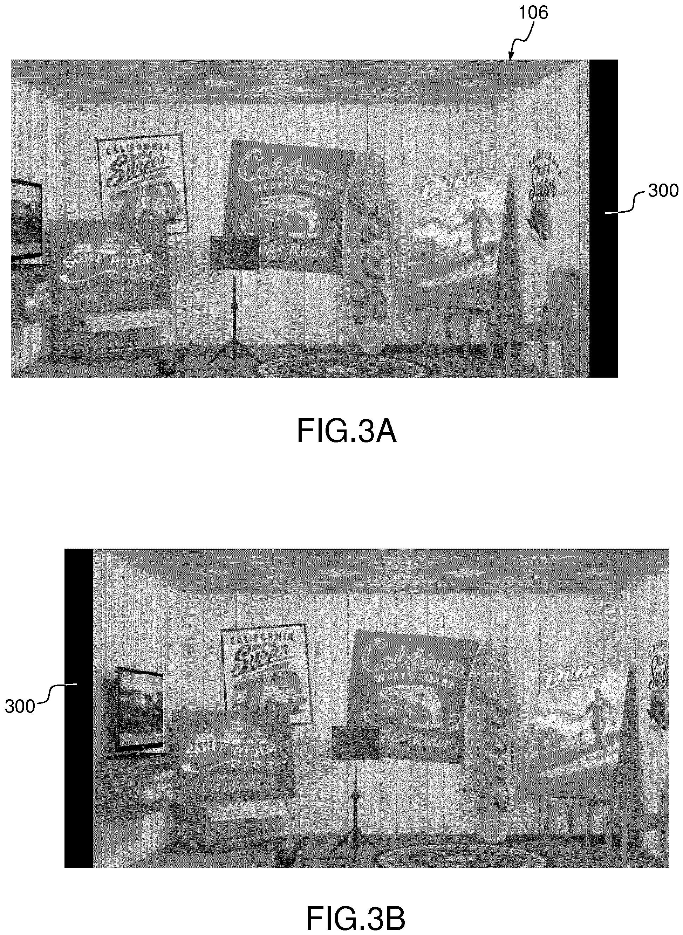

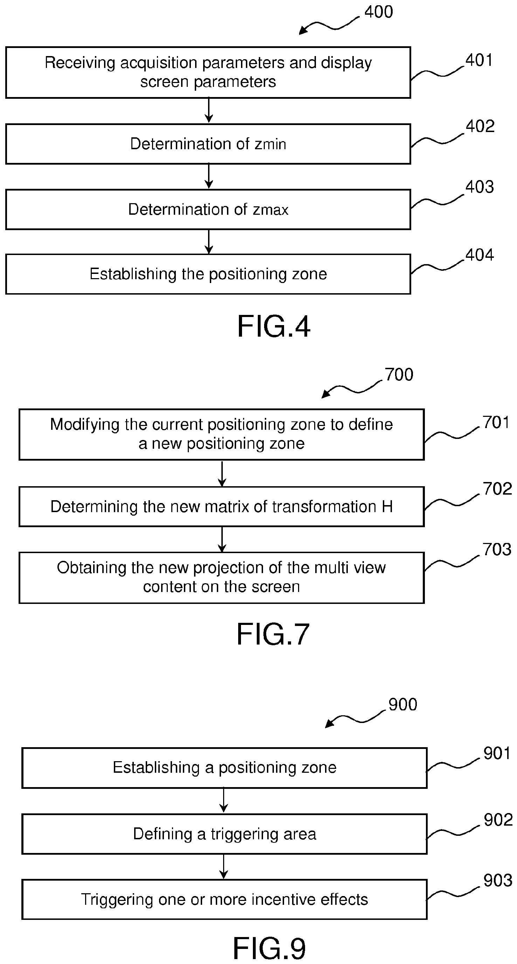

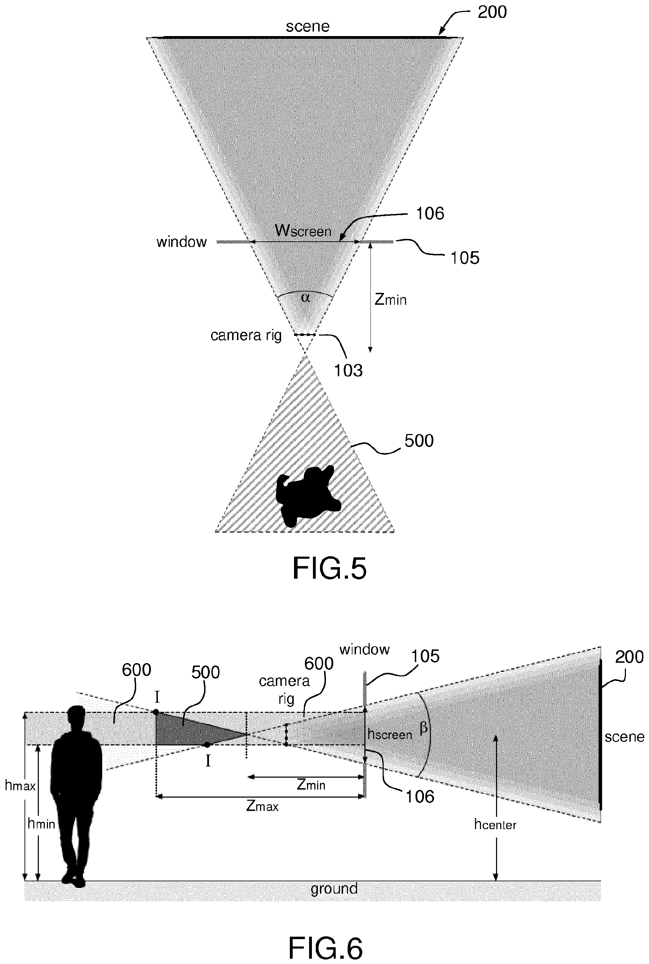

To prevent the user from reaching the limits of the displayed multi view content (e.g. leading to the display of black bands 300 on the edges of the display screen as shown in Figures 3A and 3B), the present disclosure proposes a method 400 (shown in Figure 4) for generating a positioning zone 500 (so called comfort zone, shown in Figures 5 and 6) to observe, on the display screen 106, a multi view content acquired by the rendering system 1.

In the following, the method 400 is operated by the image projection computing apparatus 104. Naturally, in a variant or complement, said method 400 can be implemented by another element of the rendering system 1, such as the display device 105 or a standalone element (not shown in the Figures).

In an embodiment, as shown in Figures 5 and 6, the positioning zone 500 can have a pyramid shape, for instance centered with respect to the display screen 106.

In an embodiment, the method 400 comprises, in step 401, the reception, by the image projection computing apparatus 104, of acquisition parameters of the acquisition device 103 and parameters of the display screen 106.

The acquisition parameters can comprise the horizontal angle of view $\alpha$ and the vertical angle of view $\beta$ of the acquisition device 103, as shown in Figures 5 and 6. The parameters of the display device 105 can further comprise the height $h_{screen}$ and width $w_{screen}$ of the display screen 106.

The method 400 further comprises, in step 402, the determination of a minimum distance from the display screen to define the positioning zone 500, for instance by a dedicated means 104A of the image projection computing apparatus 104.

In an embodiment, when the aspect ratio (relationship between width and height) of the multi view content captured by the acquisition device 103 differs from the aspect ratio associated with the display screen 106, the minimum distance $z_{min}$ corresponds to the maximum between:

- an horizontal minimum distance obtained from the width $w_{screen}$ of the display screen and the horizontal angle of

view $\alpha$ of the acquisition device 103, thanks to, for instance, the following equation:

$$z_{min} = \frac{w_{screen}}{2 \tan^{-1}\left(\frac{\alpha}{2}\right)}$$

- a vertical minimum distance obtained from the height $h_{screen}$ of the display screen and the vertical angle of view $\beta$ of the acquisition device 103, thanks to, for instance, the following equation:

$$z_{min} = \frac{h_{screen}}{2 \tan^{-1}\left(\frac{\beta}{2}\right)}$$

In a variant, when the aspect ratio of the multi view content captured by the acquisition device 103 is the same than the one of the display screen 106, the minimum distance $z_{min}$ corresponds to the horizontal minimum distance above mentioned, which is equal to the vertical minimum distance.

Thus, the top of the pyramid shape of the positioning zone 500 is arranged at the minimum distance $z_{min}$ and centered with respected to the display screen 106.

As shown in Figures 5 and 6, the pyramid shape of the positioning zone 500 is defined by the horizontal angle of view $\alpha$ and the vertical angle of view $\beta$ of the acquisition device 103.

In a variant or complement, the method 400 further can comprise, in step 403, the definition, by the means 104A, of a maximum distance $z_{max}$ from the display screen 106 obtained from a minimum height $h_{min}$ and a maximum height $h_{max}$ between which the user's gaze can be located, as shown in Figure 6. Said maximum distance $z_{max}$ can depend on the user's height, his capabilities to move in the vertical direction and/or predetermined. The minimum height $h_{min}$ and maximum height $h_{max}$ can be determined by the image projection computing apparatus 104 based on a user input, for instance, through a user interface (not shown in the Figures) operated by either the image projection computing apparatus 104 or the display device 105. For example, $h_{min}$ and $h_{max}$ can correspond to the height of the user minus a given value and plus a given value respectively (said given value being positive or negative). In a variant, the user can also directly enter $h_{min}$ and $h_{max}$ in the rendering system through the user interface.

As depicted in Figure 6, an horizontal band 600 arranged between $h_{min}$ and $h_{max}$ can be determined. The image projection computing apparatus 104 can further obtain the maximum distance $z_{max}$ from the intersection I of the pyramid shape and the horizontal band 600. When there are two different intersections I (located at different distances), $z_{max}$ corresponds to the distance associated with the intersection I arranged the furthest from the display screen 106. The maximum distance $z_{max}$ corresponds to the distance from which the parallax effect starts to be attenuated for a constant amplitude of movement of the user's head position.

In an embodiment according to the disclosure, the generated positioning zone 500 to observe the multi view content can be displayed on the screen 106 for instance through the user interface.

In a further embodiment, as shown in Figure 7, the disclosure also proposes a method 700 for adjusting a multi view content acquired by an acquisition device 103 and displayed on a screen 106 of a display device 105 to which a current positioning zone 500 has been obtained for example from the implementation of the method 400.

In particular, the method 700 can comprise, in a step 701, the modification of the current positioning zone 500, for instance upon user's input through a dedicated user interface (which can be the same as the one described with regards to method 400).

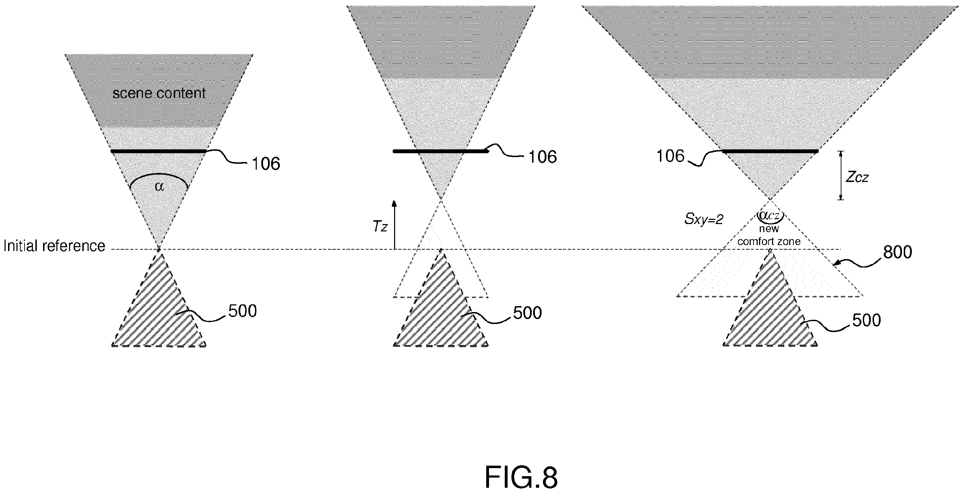

As illustrated in Figures 8A to 8C, the modification can comprise:

- a translation in the depth direction (z) with respect to the display screen 106 of the current positioning zone 500, and/or
- a uniform scaling in the horizontal and vertical directions (x, y), which correspond to a uniform scaling of the horizontal and vertical angles of view ($\alpha$, $\beta$) defining the current positioning zone 500. The scaling is performed by considering the center of the screen 106. It should be noted that no scaling in the depth direction (z) is allowed on the current positioning zone.

The global modification (represented by the matrix of transformation H as previously defined) is defined, in a step 702, by:

$$H = S_{xy} * T_z = \begin{bmatrix} s & 0 & 0 & 0 \\ 0 & s & 0 & 0 \\ 0 & 0 & 1 & 0 \\ 0 & 0 & 0 & 1 \end{bmatrix} * \begin{bmatrix} 1 & 0 & 0 & 0 \\ 0 & 1 & 0 & 0 \\ 0 & 0 & 1 & t_z \\ 0 & 0 & 0 & 1 \end{bmatrix} \text{ with } s = s_x = s_y \text{ and } s_z = 1$$

wherein $S_{xy}$ is the scaling matrix and $T_z$ is the translation matric in depth.

As shown in the Figures 8A to 8C, the translation in depth and the uniform scaling leads to the generation of a new positioning zone 800 defined by a new minimum distance $z_{cz}$ and new angles of view $\alpha_{cz}$ and $\beta_{cz}$ as follows:

$$z_{cz} = z_{min} + |T_z|$$

$$\alpha_{cz} = \alpha \times S_{xy}$$

By considering the above described equation for obtaining the projection of the multi view content on the screen 106 in function of the user's head position:

$$\begin{bmatrix} u \\ v \\ Z' \\ 1 \end{bmatrix}_{eye} = -\frac{1}{Z_{eye}} * K_{eye} * T_{eye} * H * P_c * z_{uv} * K_c^{-1} * \begin{bmatrix} u \\ v \\ 1 \\ Z_{(u,v)} \\ 1 \end{bmatrix}_c$$

with the new transformation matrix H, the image projection computing apparatus 104 adapts, in step 703, the projection of the displayed multi view content to the definition of the new positioning zone 800.

Thus, when the new positioning zone 800 has been expanded by the user for instance thanks to the user interface, the displayed multi view content is adapted (for example by an adaptation means 104B of the computing apparatus 104) so that the user can move in the new positioning zone without reaching the limits (such as black bands) of the display of multi view content.

It should be appreciated that a front translation (i.e. when the positioning zone is moved towards the screen as shown in Figures 8A to 8C, $T_z < z_{min}$) can lead to increase the current positioning zone.

In an illustrative but non limitative example, the set of dual arrows (not shown) can be either displayed on the screen 106 for selection by the user directly by touching the arrows when the screen is a touch screen or through a keyboard or dedicated remote control.

In a further embodiment shown in Figure 9, the disclosure also proposes a method 900 for informing a user observing a multi view content on a screen 106 that he is close to reach and/or he is moving towards the boundaries of the corresponding positioning zone 500. Said method 900 can further be implemented by the image projection computing apparatus 104.

To that end, the method 900 comprises, in a step 901, the generation of a positioning zone 500 to observe the multi view content (for instance by the means 104A of the computing apparatus 104), according to the method 400 as previously described.

In a step 902, the method 900 further comprises the definition (e.g. by a module 104C of the computing apparatus 104) of a triggering area 550 arranged, at least partially, within the positioning zone 500. In a variant, the triggering area can be arranged outside the positioning zone 500, for instance contiguous to the positioning zone 500.

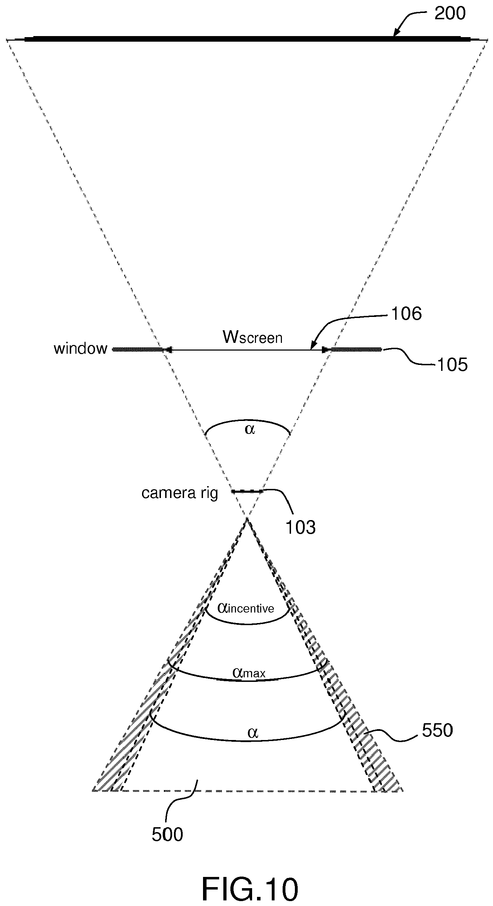

As shown in Figure 10, the triggering area 550 can have a pyramid shape defined:

-    in an horizontal plane, by an incentive angle of view $\alpha_{incentive}$ defining a border of the triggering area 550 arranged within the positioning zone 500 and by a maximum horizontal angle of view $\alpha_{max}$ defining another border of said triggering area 550 located outside the positioning zone 500. In a variant or complement, $\alpha_{max}$ can correspond to the horizontal angle of view $\alpha$ defining the positioning zone 500. In a further variant or complement, $\alpha_{incentive}$ and $\alpha_{max}$ can be arranged within the positioning zone 500;

-    in a vertical plane, by an incentive angle of view $\beta_{incentive}$ (not shown in the Figures) defining a border of the triggering area 550 arranged within the positioning zone 500 and by a maximum vertical angle of view $\beta_{max}$ defining another border of said triggering area 550 located outside the positioning zone 500. In a variant or complement, $\beta_{max}$ can correspond to the vertical angle of view $\beta$ defining the positioning zone 500. In a further variant or complement,

$\beta_{incentive}$ and $\beta_{max}$ can be arranged within the positioning zone 500;

When the user's head position is located within said triggering area 550, the method 900 further comprises, in a step 903, the triggering of one or more incentive effects to encourage the user to stay within the positioning zone 500. The step 903 can be implemented by a triggering means 104D of the image projection computing apparatus 104.

In an embodiment, an incentive effect can be at least one of:

- a darkening effect to darken the display screen 106 when the user's head is moving towards a boundary of the positioning zone 500, and conversely. The darkening effect depends on the user's head position within the triggering area 550,
- a parallax intensity effect to adapt an intensity of a parallax effect associated with a user's head movement within the triggering area 550,
- an arrow effect to display one or more direction arrows on the display screen 106.

Naturally, one or more incentive effects can be triggered concurrently by the computing apparatus 104.

In particular, the darkening effect can increase (e.g. the brightness of the screen 106 decreases, the screen 106 becomes darker) when the angle of view (horizontal or vertical) associated with the user's head position located within the triggering area 550 increases, and conversely. When the angle of view of the user's head position reaches one maximum angle (amongst the horizontal angle $\alpha_{max}$ and/or vertical angle $\beta_{max}$), the screen 106 becomes completely dark or black. It should be appreciated that the darkening effect decreases (i.e. the brightness of the screen 106 increases, the screen 106 becomes brighter) when the user's head moves away from a border of the triggering area 550 towards the center of the positioning zone 500.

In addition, while the darkening effect has been described as applied on the screen 106, it can be also applied, in a variant or complement, directly to the multimedia content itself (without modifying the brightness of the screen 106).

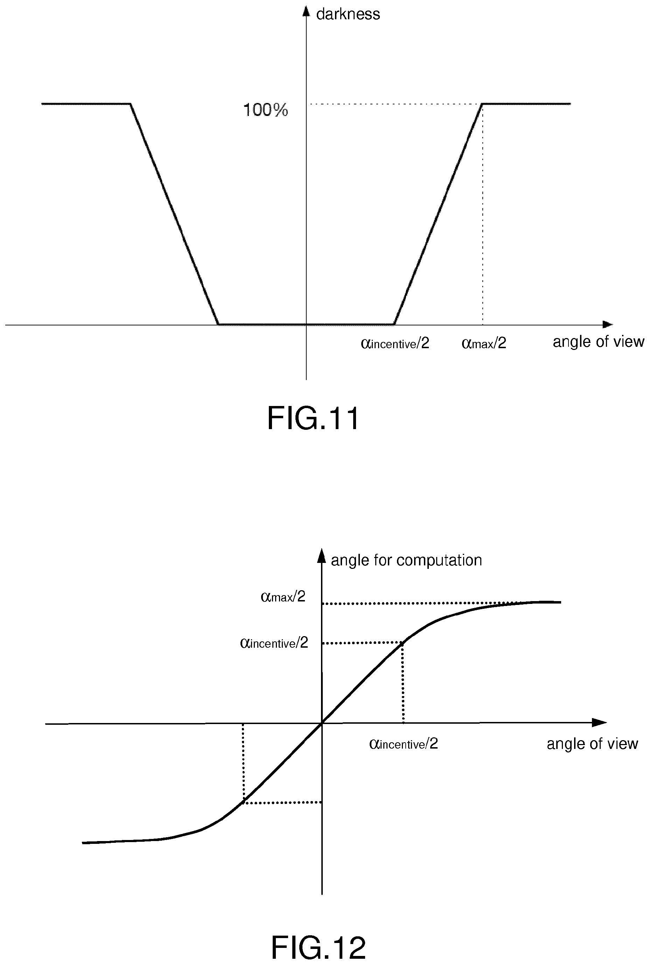

As depicted by the curve of Figure 11, the intensity of the darkening effect can be proportional to the angle of view associated with the user's head. Naturally, other kinds of relationship between the intensity of the darkening effect and the angle of view of the user's head might be used without departing from the disclosure.

Besides, the parallax intensity effect allows a modification of the speed of movement of elements appearing in the multi view content displayed on the screen 106, when the angle of view associated with the user's head position located within the triggering area 550 increases, and conversely.

To that end, in an embodiment, the image projection computing apparatus 104 can use a computation angle associated with the angle of view of the user's head. Said computation angle can be obtained from the relationship defined, for instance, by the exemplary curve shown in Figure 12. Instead of computing the projection of the multimedia content to be displayed on the screen 106 based on the angle of view of the user's head, the computing apparatus 104 can determine the projection associated with said angle of view of the user's head by using the corresponding computation angle.

Thus, the parallax effect perceived by the user corresponds to the parallax effect which can be observed at an angle different from the angle of view associated with the user position, so that the parallax effect seems to be attenuated to the user observing the screen 106.

In an embodiment, when the arrow effect is implemented, one or more arrows can be displayed when the angle of view associated with user's head is arranged between $\alpha_{incentive}$ and $\alpha_{max}$, and/or $\beta_{incentive}$ and $\beta_{max}$. The arrows can be oriented towards the center of the positioning zone 500 to encourage the user to move away from the borders of the later. Once the user's head is in the positioning zone 500, but not in the triggering zone 550 anymore, the arrows can disappear. In a further complement, the arrows can blink to draw user's attention. The blinking rate can depend on the position of the user's head within the triggering zone (such as the closer to outside borders of the triggering zone the user's head is, the higher the blinking rate will be).

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or subcombination.

## Claims

1.  Method for generating a positioning zone (500) to observe, on a display screen (106), a multi view content acquired by an acquisition device (103) and displayed according a user's position,
    wherein the positioning zone (500) is established (404) based one or more obtained acquisition parameters of the acquisition device (103) and one or more obtained parameters of the display screen (106).

2.  Method according to claim 1, wherein the positioning zone (500) has a pyramid shape.

3.  Method according to claim 2, wherein the pyramid shape of the positioning zone (500) is defined by an horizontal angle of view ($\alpha$) of the acquisition device and a vertical angle of view ($\beta$) of the acquisition device (103).

4.  Method according to claims 1 to 3, wherein the positioning zone (500) is defined by a minimum distance from the display screen (106).

5.  Method according to preceding claim, wherein said minimum distance ($z_{min}$) from the display screen (106) corresponds to the maximum distance between:

    - an horizontal minimum distance obtained from a width ($w_{screen}$) of the display screen (106) and an horizontal angle of view ($\alpha$) of the acquisition device (103),
    - a vertical minimum distance obtained from a height ($h_{screen}$) of the display screen (106) and a vertical angle of view ($\beta$) of the acquisition device (103).

6.  Method according to claims 1 to 5, wherein the positioning zone (500) is defined by a maximum distance ($z_{max}$) from the display screen (106).

7.  Method for adjusting a multi view content acquired by an acquisition device (103) and displayed on a display screen (106) depending on a user's position to which a current positioning zone (500) has been obtained according to the method of claims 1 to 6,
    wherein said adjusting (703) of the multi view content depends on parameters of a new positioning zone (800) obtained from one or more modifications (701) performed on the current positioning zone (500).

8.  Method according to claim 7, wherein the one or more modifications comprise at least one of:

    - a translation ($T_z$) in depth direction of the current positioning zone (500) with respect to the display screen (106),
    - a uniform scaling ($S_{xy}$) in the horizontal and vertical directions of the current positioning zone (500).

9.  Method according to claim 8, wherein the uniform scaling ($S_{xy}$) is applied to both the current horizontal and vertical angles ($\alpha$, $\beta$) of the current positioning zone (500).

10. Apparatus for generating a positioning zone to observe, on a display screen (106), a multi view content acquired by an acquisition device (103) and displayed according a user's position,

wherein it comprises a means (104A) for generating the positioning zone (500) based one or more obtained acquisition parameters of the acquisition device (103) and one or more obtained parameters of the display screen (106).

11. Apparatus according to claim 10, wherein the established positioning zone (500) has a pyramid shape.

12. Apparatus according to claim 11, wherein the pyramid shape of the positioning zone (500) is defined by an horizontal angle of view ($\alpha$) of the acquisition device (103) and a vertical angle of view ($\beta$) of the acquisition device.

13. Apparatus according to claims 10 to 13, wherein the positioning zone (500) is defined by a minimum distance ($z_{min}$) and a maximum distance ($z_{max}$) from the display screen.

14. Apparatus for adjusting a multi view content acquired by an acquisition device (103) and displayed on a display screen (106) depending on a user's position to which a current positioning zone (500) has been obtained according to the method of claims 1 to 6,
wherein the apparatus (104) comprises means (104B) for adjusting the multi view content depending on parameters of a new positioning zone (800) obtained from one or more modifications performed on the current positioning zone (500).

15. Apparatus according to claim 14, wherein the one or more modifications comprise at least one of:

- a translation ($T_z$) in depth direction of the current positioning zone (500) with respect to the display screen (106),
- a uniform scaling ($S_{xy}$) in the horizontal and vertical directions of the current positioning zone (500).

FIG.1A

FIG.1B

FIG.2A

FIG.2B

FIG.2C

FIG.2D

FIG.3A

FIG.3B

400

| Receiving acquisition parameters and display screen parameters | 401 |

↓

| Determination of zmin | 402 |

↓

| Determination of zmax | 403 |

↓

| Establishing the positioning zone | 404 |

**FIG.4**

700

| Modifying the current positioning zone to define a new positioning zone | 701 |

↓

| Determining the new matrix of transformation H | 702 |

↓

| Obtaining the new projection of the multi view content on the screen | 703 |

**FIG.7**

900

| Establishing a positioning zone | 901 |

↓

| Defining a triggering area | 902 |

↓

| Triggering one or more incentive effects | 903 |

**FIG.9**

FIG.5

FIG.6

FIG.8

FIG.10

darkness

100%

$\alpha_{incentive}/2$　　$\alpha_{max}/2$　　angle of view

## FIG.11

angle for computation

$\alpha_{max}/2$

$\alpha_{incentive}/2$

$\alpha_{incentive}/2$　　angle of view

## FIG.12

Europäisches
Patentamt

European
Patent Office

Office européen
des brevets

# EUROPEAN SEARCH REPORT

Application Number

EP 17 30 5710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 549 174 B1 (CHAVEZ DAVID A [US] ET AL) 17 January 2017 (2017-01-17)<br>* column 14, line 38 - column 16, line 67; figures 6-8 *<br>* column 1, line 30 - line 36 *<br>----- | 1-15 | INV.<br>H04N13/02<br>H04N7/18 |

TECHNICAL FIELDS
SEARCHED      (IPC)

H04N

The present search report has been drawn up for all claims

| Place of search | Date of completion of the search | Examiner |
|---|---|---|
| The Hague | 14 November 2017 | Wahba, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 30 5710

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2017

| Patent document cited in search report | | Publication date | Patent family member(s) | | Publication date |
|---|---|---|---|---|---|
| US 9549174 | B1 | 17-01-2017 | US<br>US | 9549174 B1<br>2017127051 A1 | 17-01-2017<br>04-05-2017 |

EPO FORM P0459

For more details about this annex : see Official Journal of the European Patent Office, No. 12/82

**REFERENCES CITED IN THE DESCRIPTION**

**Non-patent literature cited in the description**

- OpenGL Programming Guide 9th edition, Appendix E. **DAVE SHREINER ; GRAHAM SELLERS ; JOHN KESSENICH.** The Khronos OpenGL ARB Working Group